**Europäisches Patentamt**

**European Patent Office**

**Office européen des brevets**

(11) Veröffentlichungsnummer: **0 174 461**
**B1**

(12) **EUROPÄISCHE PATENTSCHRIFT**

(45) Veröffentlichungstag der Patentschrift:
**06.04.88**

(21) Anmeldenummer: **85108675.1**

(22) Anmeldetag: **11.07.85**

(51) Int. Cl.⁴: $A\ 01\ G\ 7/00,\ A\ 01\ G\ 9/10$

(54) Verfahren zum Heranziehen von Pflanzen mit Zwergwachstum, sowie Pflanztopf hierfür.

(30) Priorität: **13.07.84 DE 3425919**
**09.01.85 DE 3500518**

(43) Veröffentlichungstag der Anmeldung:
**19.03.86 Patentblatt 86/12**

(45) Bekanntmachung des Hinweises auf die Patenterteilung:
**06.04.88 Patentblatt 88/14**

(84) Benannte Vertragsstaaten:
**AT BE CH DE FR GB IT LI LU NL SE**

(56) Entgegenhaltungen:
**DE-A-2 744 143**
**US-A-2 814 161**

(73) Patentinhaber: **Folag AG Kunststoffwerke, Mettenwilstrasse 18, CH- 6203 Sempach- Station (CH)**
(84) Benannte Vertragsstaaten: **CH FR GB IT LI SE**

(73) Patentinhaber: **Ingelbrecht, Georges, 16 Torhoutsesteenweg, B-8021 Loppem (BE)**
(84) Benannte Vertragsstaaten: **BE LU**

(73) Patentinhaber: **CHEMIE LINZ AG, Postfach 296, A-4021 Linz (AT)**
(84) Benannte Vertragsstaaten: **AT**

(73) Patentinhaber: **Happy Bonsai AG, Niederstad 51, CH- 6053 Alpnachstad (CH)**
(84) Benannte Vertragsstaaten: **DE**

(73) Patentinhaber: **De B.V.B.A. Miniflor, Dreef ter Panne 1, B-8200 Brugge (BE)**
(84) Benannte Vertragsstaaten: **NL**

(72) Erfinder: **Lenke, Michael, Franz- Wandinger- Strasse 42, D-8355 Hengersberg (DE)**

(74) Vertreter: **Kuhnen, Wacker & Partner, Schneggstrasse 3-5 Postfach 1729, D-8050 Freising (DE)**

LIBER, STOCKHOLM 1988

## Beschreibung

Die Erfindung betrifft ein Verfahren zum Heranziehen von Pflanzen mit Zwergwachstum nach dem Oberbegriff des Anspruchs 1, sowie einen Pflanztopf hierfür nach dem Oberbegriff des Anspruches 5.

Es ist bekannt, Pflanzen wie z. B. Kakteen in extrem kleine Töpfe zu pflanzen, deren Inhalt oft nur 50 cm$^3$ oder noch weniger beträgt. Derartige Mini-Kakteen wachsen aufgrund des kleinen Topfinhaltes nur äußerst langsam, so daß es möglich ist, auch auf beschränktem Raum eine größere Anzahl von Kakteen mit zwerghaftem Wuchs zu halten. Es ergibt sich jedoch hier das Problem, daß die Wurzeln, nachdem sie den Topf ausgefüllt haben, zu "kreisen" beginnen, also entlang der inneren Topfwand im Kreise wachsen. Dieses sogenannte Wurzelkreisen ist insoferne schädlich, als die Wurzeln hierbei kaum mehr Haarwurzeln zur Nährstoffaufnahme ausbilden, so daß die Pflanze über kurz oder lang zu kümmern beginnt. Um diesem Problem abzuhelfen, ist man gezwungen, die Pflanze in einen größeren Topf umzupflanzen, so daß den Wurzeln wieder ausreichend Platz und Nährsubstrat zur Verfügung steht, wodurch das Wurzelkreisen zunächst beendet wird und die Wurzeln wieder nach außen in neue Regionen des Nährsubstrates wachsen können.

Hierdurch setzt jedoch nach dem Umtopfen bei einer Pflanze für gewöhnlich ein Wachstumsschub ein, da den Wurzeln nun wieder Nährsubstrat in ausreichender Menge zur Verfügung steht, so daß die gewachsenen Wurzeln nach einiger Zeit wieder zu kreisen beginnen und ein erneutes Umtopfen nötig ist. Hierdurch steigt die erforderliche Topfgröße im Laufe der Zeit immer mehr an und es ergibt sich somit, wenn die Pflanze gesund erhalten werden soll, ein immer größerer Pflanzenwuchs. Man kann somit durch das Einsetzen von Pflanzen, wie beispielsweise Kakteen, in extrem kleine Töpfe das normale Wachstum nur verzögern, ein echter bleibender Zwergwuchs ist mit diesem Verfahren nicht erreichbar.

Aus der DE-A 2 434 538 ist bekannt, daß bei der Aufzucht von Pflanzen das Wurzelkreisen für eine gewisse Zeitspanne wirksam verhindert werden kann, wenn der Topf innen mit einer Schicht aus offenzelligem Weichschaum mit einer Dicke von etwa 1 - 10 mm ausgekleidet ist.

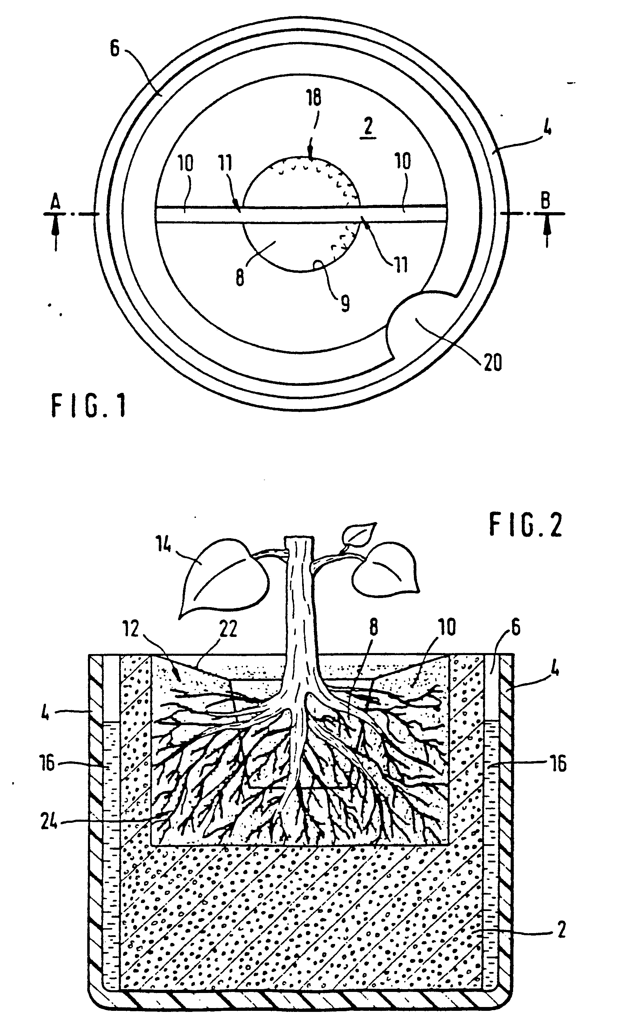

Bei Erreichen dieser Weichschaumschicht sollen die Wurzeln zunächst das Wachstum einstellen ohne zu kreisen und neue aktive Wurzeln werden im Inneren des Wurzelballens gebildet. Dadurch sollen Stiele und Blätter der Pflanzen sehr rasch wachsen, wobei sehr geringe Abstände zwischen den Ansatzstellen auftreten und die Blüte der Pflanzen 25 bis 30 Tage früher beginnt, als bei der Aufzucht in normalen Töpfen. Das heißt also, daß die Pflanze zunächst kleiner bleibt als in üblichen Töpfen, wie aus der dortigen Figur 2 im Vergleich mit der dortigen Figur 1 deutlich zu sehen ist. Ein richtiger Zwergwuchs ist aber auch hier nicht zu erreichen, und ist auch nicht das Ziel.

Ein bleibender Zwergwuchs ist hingegen durch das sogenannte Bonsai-Verfahren möglich, das in Asien entwickelt wurde. Auch hier werden für die Aufzucht der Pflanzen sehr kleine Pflanzgefäße verwendet und gleichzeitig wird die Pflanze mit wenig Nährstoffen versorgt. Zur Unterbindung des auch hier naturgemäß auftretenden Wurzelkreisens an der Topfwand muß der Wurzelballen regelmäßig zurückgeschnitten werden, was einen großen zeitlichen Aufwand und Fachkenntnis erfordert.

Schließlich ist aus der AT-A 350 831 ein Verfahren zum Beschränken des Größenwachstums von Pflanzen bekannt, bei dem bei Aufzucht in sehr kleinen Behältern das Wurzelkreisen, d.h. das tangentiale Fortwachsen ohne Bildung von genügend zahlreichen weiteren feinen Wurzeln, dadurch unterbunden werden soll, daß die Wand des Behälters mit Öffnungen versehen ist, die so klein bemessen sind, daß sie das Durchwachsen von Wurzeln zumindest im wesentlichen verhindern, jedoch den Durchtritt von Nährstoffen erlauben. Der Behälter, dessen Wandstärke vorzugsweise maximal das Vierfache der lichten Weite der Öffnungen betragen soll, muß hierbei von Nährsubstrat umgeben sein, wobei die Pflanze über kleine Haarwurzeln zumindest einen Teil der zum Wachstum in der gewünschten Größe notwendigen Nährstoffe vom umgebenden Nährsubstrat beziehen soll, während der poröse Pflanzenbehälter selbst naturgemäß eine Größe aufweisen muß, die kleiner ist, als es das Wachstum in der gewünschten Größe erfordern würde. Es hat sich jedoch gezeigt, daß eine Größe der Öffnungen, welche ein Durchwachsen der Wurzeln im wesentlichen verhindert, auch für die Verhinderung des Wurzelkreisens zu gering ist, so daß die Wurzeln wie an einer geschlossenflächigen Wand kreisen. Aus der DE-A-2 744 143 ist ein ähnlicher Behälter bekannt, dessen Wand mit, eventuell schlitzförmigen, Öffnungen versehen ist, die so klein bemessen sind, daß nur die feine Wurzeln hindurch wachsen können.

Weiterhin hat dieses Verfahren den Nachteil, daß selbst das dort angestrebte Wirkungsprinzip davon abhängt, daß die Öffnungen, die einen Durchmesser von etwa 0,1 bis 1 mm besitzen, nicht verstopfen. Es ist daher eine laufende Kontrolle und gegebenenfalls Reinigung oder Auswechselung des Behälters erforderlich. Ferner werden an das Material hohe Anforderungen gestellt, da sonst die Gefahr besteht, daß der Behälter durch das unvermeidliche Wurzelwachstum vorzeitig gesprengt wird und damit die wachstumsbeschränkende Wirkung auf die Pflanze verloren geht. Die Behälter sollen daher aus korrosionsfestem Material bestehen, vorzugsweise werden sie aus Netzen aus rostfreiem Stahl mit einer Wandstärke von etwa 0,1 mm hergestellt. Derartige Materialien sind teuer und unter Umständen schwer zu beschaffen.

Der vorliegenden Erfindung liegt die Aufgabe zugrunde, Pflanzen mit bleibendem Zwergwuchs zu erzielen, ohne alle die Nachteile, die den verfahren gemäß dem Stand der Technik anhaften, in Kauf nehmen zu müssen.

Der Lösung der Aufgabe liegt die überraschende Erkenntnis zugrunde, daß ein Wurzelkreisen in Töpfen aus für Pflanzentöpfe üblichen Materialien wie gebranntem Ton dann wirksam verhindert werden kann, wenn die den Wurzelballen umgebende Wand des Pflanztopfes, dessen Innenraum kleiner gewählt werden muß als zum normalen Wachstum erforderlich ist, mit mindestens einem ungefähr nach außen verlaufenden Blindkanal geringer Weite ausgestattet ist, in den die Wurzeln hineinwachsen können, dessen Weite und Länge aber so bemessen ist, daß ein Zurückwachsen der Wurzel nicht möglich ist. Da das gesamte Nährsubstrat im Inneren des Topfes untergebracht werden muß, bestimmt das Volumen jenes Raumes, der dem Wurzelwachstum zur Verfügung steht, im Gegensatz zum Stand der Technik, die Größe der Pflanze bzw. das Ausmaß des Zwergwachstums.

Gegenstand der vorliegenden Erfindung ist demnach ein Verfahren zum Heranziehen von Pflanzen mit Zwergwachstum, bei dem die junge Pflanze bzw. gegebenenfalls deren Samen, Zwiebel, bewurzelter Steckling, Ableger oder dergleichen in einem Planzloch eines Planztopfes mit Substrat eines für das volle Wachstum zu geringen Volumens eingesetzt wird, wobei die Wand des Planztopfes einen Gasaustausch zuläßt, das dadurch gekennzeichnet ist, daß das Pflanzloch des Pflanztopfes mit wenigstens einem, nach außen verlaufenden, mit annähernd parallelen, atmungsaktiven Wänden versehenen Blindkanal verbunden ist, dessen lichte Weite mindestens so bemessen ist, daß ein Hineinwachsen von Wurzeln ermöglicht ist, die aber höchstens dem Durchmesser einer stärkeren Wurzel der zu züchtenden Pflanze entspricht, und dessen Länge bzw. Tiefe mehr als das Zweifache der lichten Weite beträgt.

Für das wirksame Verhindern des Wurzelkreisens ist naturgemäß die Dimensionierung der Blindkanäle von Bedeutung. Die lichte Weite derselben muß mindestens so bemessen sein, daß nicht nur feine Haarwurzeln hineinwachsen können, sondern ein ganzer Wurzelstrang. Andererseits darf die lichte Weite auch nicht zu groß gewählt werden, da ja der erfindungsgemäße Effekt darauf beruht, daß die Wurzel auf Grund der geringen Weite des Blindkanals bei Erreichen des blinden Endes an einer Umkehr gehindert wird bzw. die durch zunehmendes Wachstum stärker werdenden Wurzeln die Eingangsöffnung des Kanals verschließen.

Die lichte Weite des erfindungsgemäßen Blindkanals soll daher den Durchmesser einer stärkeren Wurzel der zu züchtenden Pflanze nicht wesentlich übersteigen und sie wird daher der zu züchtenden Pflanzenart anzupassen sein.

Allgemein kann man davon ausgehen, daß diese Weite von mindestens einigen Zehntel-Millimetern bis zu mehreren Millimetern, z. B. bis zu 5 bis 7 Millimetern, betragen kann.

Für das Gelingen des erfindungsgemäßen Verfahrens ist es ferner wesentlich, daß ein bestimmtes Mindestverhältnis der Länge bzw. der Tiefe des Blindkanals zur lichten Weite desselben eingehalten wird. Es liegt vorteilhaft zwischen drei und sechs. Bei einem Verhältnis zwischen zwei und drei ist zwar schon ziemliche Sicherheit gegeben, daß eine Umkehr nicht mehr stattfindet, bei manchen Pflanzen ist aber unter günstigen Verhältnissen eine Umkehr der in den Blindkanal hineingewachsenen Wurzel nicht ganz auszuschließen. Ein Verhältnis über sechs hat keine ungünstigen Auswirkungen, es ist aber zu beachten, daß daraus eine unhandliche Form des gesamten Pflanztopfes resultieren kann. In der Praxis hat sich ein Verhältnis von vier bis fünf bei den meisten in Frage kommenden Pflanzen besonders bewährt.

Sind mehrere Blindkanäle vorgesehen, empfiehlt es sich, diese symmetrisch anzuordnen. Auch die Wahl der Anzahl der Blindkanäle wird sich nach den zu züchtenden Pflanzen und bis zu einem gewissen Ausmaß auch nach der gewünschten Größe der Pflanze zu richten haben, da ja das Volumen der Blindkanäle zusammen mit jenem des Pflanzloches die Größe der Pflanze bestimmt. Die Blindkanäle erstrecken sich vom Pflanzloch aus meist radial nach außen, sie können sich aber, meist zusätzlich, auch axial nach unten erstrecken.

Wird eine Pflanze in das Pflanzloch eingesetzt, so beginnen deren Wurzeln zunächst radial nach außen zu wachsen, bis sie die Wand des Pflanzloches erreicht haben. Nach dann einsetzender kurzer kreisender Wachstumsbewegung erreichen die Wurzeln alsbald die Öffnung eines der Blindkanäle und setzen nun das radiale Wachstum nach außen fort, bzw. wenn sich der Blindkanal auch in den Bodenbereich hinein erstreckt, wachsen die Wurzeln auch axial nach unten. Erreicht nun das Wurzelwachstum das Ende eines Blindkanals, können die Wurzeln nicht mehr zurückwachsen, da durch das gegebene Verhältnis von Länge und Tiefe des Blindkanals zu seiner lichten Weite die Wurzeln die Öffnung des Kanals zum Pflanzloch bereits annähernd verschlossen haben, wenn die Spitze der Wurzel das Ende des Blindkanals erreicht hat. Die Ausdehnung des Wurzelgeflechtes der Pflanze ist somit zu dem Zeitpunkt beendet, an dem alle Wurzeln des Geflechtes, die in den Blindkanal oder die Blindkanäle hineingewachsen sind, das Ende des Kanals oder der Kanäle erreicht haben. Die zum Wachstumsstillstand gekommenen Wurzeln können nicht kreisen, sie bilden im weiteren Verlauf nunmehr feinste Härchenwurzeln, die die Blindkanäle praktisch völlig ausfüllen und durch die Porösität des Materials auch im Blindkanal ausreichend mit Sauerstoff und vorzugsweise auch mit Wasser versorgt werden. Das so gebremste Wurzelwachstum bewirkt den bleibenden Zwergwuchs, der zu Pflanzen führt, die von jenen, die mit der klassischen Bonsaimethode erhalten werden, nicht unterschieden werden können.

Wie schon erwähnt muß die Wand, die sowohl das Pflanzloch als auch den oder die Blindkanäle umgibt, einen Gasaustausch ermöglichen, um eine optimale Belüftung der Wurzeln, die an der Wand anstehen, aber in diese nicht einzudringen vermögen, zu gewährleisten. Gemäß einer Variante des erfindungsgemäßen Verfahrens wird die Porösität des Wandmaterials, das aus gebranntem Ton, Bimsstein oder ähnlichen Materialien besteht, so gewählt, daß es für Wasser und gegebenenfalls auch für darin gelöste Nährstoffe durchlässig ist. Das ermöglicht, daß die Pflanze durch die Umfangswand des Pflanztopfes hindurch mit Wasser und gegebenenfalls auch Nährstoffen versorgt wird.

Es hat sich jedoch gezeigt, daß eine Nährstoffzufuhr von außen durch die Wand des Pflanztopfes hindurch Probleme aufwerfen kann. So setzt eine Nährstoffzufuhr durch die Wand des Pflanztopfes hindurch eine sehr offenporige Konsistenz des dortigen Materials voraus, was zu Einschränkungen in der Brauchbarkeit der zu verwendenden Materialien führt und zu Störungen etwa durch Zusetzen der Poren Anlaß geben kann. Weiterhin kann eine bevorzugte Nährstoffzufuhr zum Grund jener Stellen, besonders der Blindkanäle hin auftreten, die geringere Wandstärke nach außen hin besitzen als die Umgebung, so daß dort eine Überdüngung und gegebenenfalls gar ein Verbrennen der feinen Haarwurzeln erfolgen kann.

Bei ausgedehnten praktischen Versuchen hat sich gezeigt, daß insbesondere bei Verwendung von hochwertiger feinporiger Keramik zur Herstellung des Pflanztopfes vorteilhafterweise von außen nur Wasser zugeführt werden soll, während die Nährstoffe etwa in Form von Nährlösungen oder in fester Form von oben her in das Pflanzloch eingeführt werden. Natürlich ist es auch möglich, das nötige Wasser ausschließlich über das Pflanzloch zuzuführen. Da das Wandmaterial im Hinblick auf die vorhandenen Blindkanäle statt einer entsprechenden Kontur auch an der Außenseite häufig eine größere Wandstärke aufweist, kann es sich auch bei dieser Art der Wasserzuführung mit Wasser vollsaugen und dient als Wasserspeicher.

Die Ausführungsform des erfindungsgemäßen Verfahrens, die auf eine Nährstoffzufuhr von außen verzichtet, ist besonders bevorzugt, weil sie in der Pflege sicherer ist und hinsichtlich der Eigenschaften des Materials des Pflanztopfes keine wesentlichen Einschränkungen mehr erfordert, da lediglich eine Durchtränkbarkeit des Wandmaterials mit Wasser gegeben sein muß, jedoch kein Nährstofftransport durch die Wand hindurch mehr zu erfolgen hat.

Besonders vorteilhaft im Sinne einer einfachen Pflege der Pflanze hat sich die Einbringung der Nährstoffe in das Pflanzloch in Form eines Langzeitdüngers mit Ionenaustausch erwiesen, der vorteilhafterweise bereits vor dem Einsetzen der Pflanze in das Substrat eingebracht, z. B. diesem zugemischt wird, so daß zur Pflege lediglich noch eine periodische Wasserzufuhr erforderlich ist. Durch einen derartigen Langzeitdünger, der sowohl in Form von kleinen Partikeln oder auch in Tablettenform oder dergleichen in den Pflanztopf eingelegt werden kann, und der seine Wirkstoffe nur unter Einwirkung des Wurzelsekretes abgibt, ist eine Überdüngung der Pflanze oder ein verbrennen der Haarwurzeln völlig ausgeschlossen, da weder eine zeitliche Überdüngung noch eine Anreicherung von Nährstoffen im porösen Wandmaterial stattfinden kann, die ebenfalls zu einer Schädigung der im Wandbereich befindlichen Haarwurzeln führen könnte. Damit sind für die Kultivierung der Pflanzen im Zwergwuchs außer einer regelmäßigen Wasserversorgung keinerlei Pflegemaßnahmen mehr erforderlich, so daß die Aufzucht von Pflanzen im Zwergwuchs im Gegensatz zu allen bisher bekannten Methoden auch für völlige Laien problemlos durchzuführen ist.

Ein weiterer Gegenstand der vorliegenden Erfindung ist ein Pflanztopf mit einem Pflanzloch, der zur Durchführung des erfindungsgemäßen Verfahrens geeignet ist und aus einem den Gasaustausch ermöglichenden Material, insbesondere aus gebranntem Ton, gefertigt ist, der gekennzeichnet ist durch das Pflanzloch mit einem oder mehreren, gegebenenfalls symmetrisch angeordneten radial nach außen und/oder axial nach unten verlaufenden Blindkanälen in Form je eines bezüglich des Topfbodens aufrecht angeordneten Schlitzes, der sich im Wandbereich des Pflanzloches und/oder im Bodenbereich desselben über das Pflanzloch hinaus erstreckt und dessen offenes Ende in das Pflanzloch einmündet, verbunden ist, wobei diese schlitzförmigen Blindkanäle eine lichte Weite von wenigstens einigen Zehntel-Millimetern bis mehreren Millimetern besitzen und eine Tiefe bzw. Länge aufweisen, die mehr als die Zweifache der lichten Weite beträgt.

Sowohl das Pflanzloch des erfindungsgemäßen Pflanztopfes als auch der Topf selbst können alle möglichen Formen aufweisen. So kann das Pflanzloch rund, viereckig oder vieleckig sein, sein Längsschnitt kann durchwegs gleichen Durchmessers sein, vorzugsweise verjüngt er sich aber zum Boden hin, um den Pflanztopf an die traditionelle Form anzupassen. Die Wand des Pflanzloches kann glatt oder geriffelt sein, wobei letzteres zu einer Oberflächenvergrößerung und daher besseren Sauerstoff- und/oder Wasserversorgung beiträgt.

Der gesamte Pflanztopf kann ebenfalls und unabhängig von der Form des Pflanzloches rund, viereckig oder vieleckig sein. Er muß eine Größe aufweisen, die geeignet ist, die sich vom Pflanzloch nach außen erstreckenden Blindkanäle aufzunehmen. Diese Blindkanäle können sich in Einbauten befinden, die in das Innere des Pflanztopfes eingelegt werden und das Volumen des Pflanzloches verkleinern. Bevorzugt ist jedoch, den Pflanztopf mit einer so großen Wandstärke zu versehen, daß die vom Pflanzloch ausgehenden schlitzförmigen Blindkanäle darin Platz finden.

Für die Erfüllung des erfindungsgemäßen Zweckes genügt es, wenn ein schlitzförmiger Blindkanal vorhanden ist. Sind mehrere Blindkanäle vorgesehen, werden sie bevorzugt symmetrisch im Pflanztopf angeordnet. Dabei ist es bei Vorliegen von zwei oder vier einander gegenüberliegenden schlitzförmigen Kanälen möglich, daß je zwei durch einen sich in den Bodenbereich erstreckenden Schlitz miteinander verbunden sind. Die schlitzförmigen Blindkanäle können gleich lang oder ungleich lang sein. Letzteres wird man vor allem bei eckigen Schalen dann wählen, wenn man der Bonsai-Tradition folgend das Pflanzloch im Topf asymmetrisch anbringt.

Die Kanäle sind zweckmäßig drei- bis sechsmal so tief, wie die lichte Weite beträgt, vorzugsweise beträgt ihre Tiefe das vier- bis fünffache der lichten Weite.

Da die Umfangswand des Pflanztopfes aus einem Material besteht, das einen Gasaustausch zuläßt und vorzugsweise wasserdurchlässig, wenn nicht gar durchlässig für gelöste Nährstoffe ist, sollte es, wenn nicht ein umfangsseitig äußeres Wasserreservoir vorgesehen ist, zweckmäßig am Boden und an den Umfangswänden von einer wasserundurchlässigen Schicht umgeben sein, um Wasserverluste durch Verdunstung nach außen zu vermeiden.

Bei Pflanztöpfen, die hingegen für eine Durchführung des erfindungsgemäßen Verfahrens mit Wasser- oder gar Nährstoffversorgung von außen bestimmt sind, kann einfach ein Hineinstellen in einen Übertopf aus wasserdichtem Material wie glasierte Keramik, Steingut, Porzellan, Kunststoff, Metall oder imprägniertes Holz und dgl. erfolgen, wobei dessen Größe so bemessen ist, daß zwischen Übertopf und dem eigentlichen Pflanztopf ein Spalt bestehen bleibt der als Reservoir für Wasser oder für eine Nährlösung dient. Dieser Spalt kann an einer Stelle, beispielsweise bei eckigen Töpfen an einer der Ecken, verbreitert sein, um ein Gießloch zu bilden, das das Eingießen von Flüssigkeit erleichtert.

Ist eine Wasser- und/oder Nährstoffversorgung von außen nicht vorgesehen, kann der Übertopf auch völlig an der Außenwand des porösen Pflanztopfes anliegen. In diesem Fall muß die Wasserversorgung über das Pflanzloch erfolgen, wofür es zweckmäßig ist, die Oberseite des Pflanztopfes mit einer konisch nach innen laufenden Abschrägung zu versehen, so daß die Einbringung der Flüssigkeit direkt in das Substrat im Pflanzloch erleichtert wird.

Bei Pflanzen ab einer gewissen Größe ist es vorteilhaft, das Aufnahmegefäß stabil auszubilden und zwischen der Außenhaut und dem eigentlichen Pflanztopf keinen Zwischenraum vorzusehen, da insbesondere bei größeren Pflanzen der Wurzeldruck drohen kann, den eigentlichen Pflanztopf zu sprengen. In diesem Fall ist es günstig, das Pflanzgefäß selbst an den Umfangswänden und im Bodenbereich, zweckmäßig aber nicht an der Oberseite der Umfangswand des Pflanztopfes mit einer wasser- und vorzugsweise dampfdiffusionsdichten Abdeckschicht in Form eines Überzugs zu versehen. Ein solcher Überzug kann beispielsweise eine direkt aufgebrannte Glasur sein, was eine günstige Fertigung erlaubt und überdies zu optisch ansprechenden Produkten führt. Es ist aber auch möglich, Überzüge durch andere Maßnahmen, wie Lackieren, Tauchen oder Spritzen aufzubringen. Dazu können z. B. Kunststoffe oder Wachs dienen. Das hat den Vorteil, daß die hohe Brenntemperatur, die für das Glasieren nötig ist, wegfällt und bezüglich Farbgestaltung und Design mehr Variationsmöglichkeiten bestehen.

Wie schon erwähnt, soll der obere Bereich der Umfangswand des Pflanzgefäßes frei von Überzügen bleiben, damit ein möglichst ungestörter Gasaustausch mit der Atmosphäre gewährleistet ist.

Natürlich ist es auch möglich, in einem entsprechend groß gewählten Pflanztopf mehrere Pflanzlöcher unterzubringen, womit die Möglichkeit für Arrangements von mehreren Pflanzen gegeben ist.

Beispiele für erfindungsgemäße Pflanztöpfe sind in der Zeichnung dargestellt.

Hierin zeigt:

Fig. 1 eine Draufsicht auf einen Pflanztopf mit Übertopf und dazwischenliegenden Spalt, der als Wasserreservoir dient;

Fig. 2 einen Schnitt durch den in Draufsicht dargestellten Pflanztopf gemäß Fig. 1 entlang der Linie A-B; und

Fig. 3 einen erfindungsgemäßen Pflanztopf ohne äußeren Spalt und mit wasserdichter Außenhaut.

Fig. 1 zeigt einen Pflanztopf 2 in runder Ausführung, der in ein wasserdichtes Aufnahmegefäß 4 so eingesetzt ist, daß dazwischen ein Spalt 6 bleibt. Annähernd achsenmittig befindet sich ein rundes Pflanzloch 8, das sich nach unten hin trapezförmig verjüngt, wie Fig. 2 zeigt. Vom Pflanzloch 8 ausgehend sind zwei einander gegenüberliegende Blindkanäle 10 ausgebildet, von denen jeder, wie aus Fig. 2 ersichtlich, als oben offener Schlitz ausgebildet ist, und deren Fortsetzung unterhalb des Bodens des Pflanzloches 8 sie untereinander verbindet. Diese Schlitze 10 münden mit einer radial inneren Öffnung 11 in das Pflanzloch 8. Das Pflanzloch 8 ist mit Substrat 12 gefüllt und dient der Aufnahme einer Pflanze 14, deren Wurzeln 24 bereits in die Blindkanäle 10 hineingewachsen sind, wie ebenfalls in Fig. 2 dargestellt ist.

Der Spalt 6 zwischen Aufnahmegefäß 4 und Pflanztopf 2 ist mit Wasser 16 gefüllt, das leicht über ein Gießloch 20 zugeführt werden kann.

Zusätzlich ist die Wand des Pflanztopfes 2 mit einer aus Fig. 2 ersichtlichen konischen Abschrägung 22 versehen, die die Zuführung von Wasser oder Nährlösung in das Pflanzloch 8 erleichtert. Mit 18 ist eine Riffelung der Umfangsoberfläche 9 des Pflanzloches 8 bezeichnet. Da das Wasser 16 außerhalb des Pflanztopfes 2 gespeichert ist, muß es das poröse Material des Pflanztopfes 2 durchdringen, bevor es das Wurzelgeflecht 24 der Pflanze 14 erreicht. Dabei saugt sich das poröse Material des Pflanztopfes 2 mit Wasser voll, so daß die Pflanze 14 vor dem Austrocknen bewahrt wird, wenn einmal übersehen wird, rechtzeitig den Spalt 6 aufzufüllen.

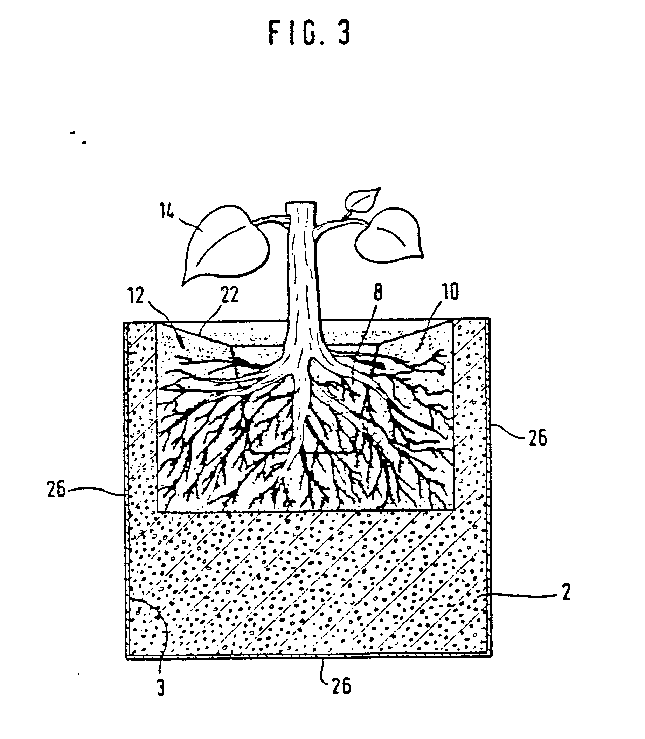

Eine Ausführungsform eines erfindungsgemäßen Pflanztopfes, bei der dieser ohne Zwischenraum mit einem wasserdichten Überzug versehen ist, ist in Fig. 3 dargestellt. In dieser Figur haben die Bezugsziffern die gleiche Bedeutung wie in den Fig. 1 und 2. Die wasserundurchlässige Abdeckschicht, die an der Umfangswand 3 des Pflanztopfes 2 außen haftet, ist mit 26 bezeichnet. Da bei dieser Variation des erfindungsgemäßen Pflanztopf eine Wasserzufuhr von außen nicht möglich ist, muß alles Wasser in das Pflanzloch 8 eingeführt werden, wozu die auch hier vorhandene Abschrägung 22 dient. Natürlich ist auch jede Abwandlung der hier beispielhaft dargestellten Pflanztöpfe hinsichtlich Gestalt, Zahl und Anordnung der Blindkanäle usw. möglich. So kann beispielsweise auf eine Erstreckung der Blindkanäle in den Bodenbereich verzichtet werden.

Es ist somit mit dem erfindungsgemäßen Verfahren sowie dem erfindungsgemäßen Pflanztopf möglich, ohne großen Aufwand und ohne spezielle Fachkenntnisse optisch ansprechende Zwergwuchsformen von Zierpflanzen zu erhalten. Selbstverständlich erstreckt sich aber das bisher beschriebene Verfahren nicht nur auf Zierpflanzen, es ist auch möglich, Nutzpflanzen mit dem erfindungsgemäßen Verfahren in Zwergwuchs zu kultivieren, was beispielsweise in der Pflanzenzüchtung Vorteile mit sich bringt. Dabei ist von Bedeutung, daß der erfindungsgemäß erzielte Zwergwuchs keine Auswirkungen auf das Erbgut hat und bei Wegfall der geschilderten Wurzelbeeinflussung, etwa beim Umtopfen in einen üblichen Topf oder in natürlichen Boden, sogleich wieder Normalwuchs erzielbar ist.

## Patentansprüche

1. Verfahren zum Heranziehen von Pflanzen mit Zwergwachstum, bei dem die junge Pflanze bzw. deren Samen, Zwiebel, berwurzelter Steckling, Ableger oder dergleichen in einem Planzloch eines Pflanztopfes mit Substrat eines für das volle Wachstum zu geringen Volumens eingesetzt wird, wobei die Wand des Pflanztopfes einen Gasaustausch zuläßt, dadurch gekennzeichnet,

daß das Pflanzloch des Pflanztopfes mit wenigstens einem, nach außen verlaufenden, mit annähernd parallelen atmungsaktiven Wänden versehenen Blindkanal verbunden ist, dessen lichte Weite mindestens so bemessen ist, daß ein Hineinwachsen von Wurzeln ermöglicht ist, die aber höchstens dem Durchmesser einer stärkeren Wurzel der zu züchtenden Pflanze entspricht und dessen Länge bzw. Tiefe mehr als das Zweifache der lichten Weite beträgt.

2. Verfahren nach Anspruch 1, dadurch gekennzeichnet, daß die Länge bzw. Tiefe des oder der Blindkanäle das drei- bis sechsfache, insbesondere das vier- bis fünffache der lichten Weite derselben beträgt.

3. Verfahren nach Anspruch 1 oder 2, dadurch gekennzeichnet, daß die Wand, die das Pflanzloch und den oder die Blindkanäle umgibt, aus einem für Wasser und Nährstoffe durchlässigen porösen Material gebildet ist und die Wasser- und Nährstoffversorgung der Pflanzen von außen durch diese Wand erfolgt.

4. Verfahren nach einem der Ansprüche 1 oder 2, dadurch gekennzeichnet, daß die Wand, die das Pflanzloch und den oder die Blindkanäle umgibt, für Wasser, jedoch nicht bzw. in nicht ausreichendem Maße für Nährstoffe durchlässig ist und die Wasserversorgung von außen durch diese Wand und/oder durch Zugabe in das Innere des Pflanzloches, die Nährstoffversorgung jedoch vom Inneren des Pflanzloches her erfolgt.

5. Pflanztopf mit einem Pflanzloch und aus einem den Gasaustausch ermöglichenden Material, insbesondere aus gebranntem Ton, zur Durchführung des Verfahrens gemäß einem der Ansprüche 1 bis 4, dadurch gekennzeichnet daß das Pflanzloch (8) mit einem oder mehreren, gegebenenfalls symmetrisch angeordneten, radial nach außen und/oder axial nach unten verlaufenden Blindkanälen (10) in Form je eines bezüglich des Topfbodens aufrecht angeordneten Schlitzes, der sich im Wandbereich des Pflanzloches und/oder im Bodenbereich desselben über das Pflanzloch hinaus erstreckt und dessen offenes Ende (11) in das Pflanzloch (8) einmündet, verbunden ist, wobei die schlitzförmigen Blindkanäle (10) eine lichte Weite von wenigstens einigen Zehntel Millimetern bis mehreren Millimetern besitzen und eine Tiefe bzw. Länge aufweisen, die mehr als das Zweifache der lichten Weite beträgt.

6. Pflanztopf nach Anspruch 5, dadurch gekennzeichnet, daß die Umfangswand des Pflanztopfes (2) eine Dicke aufweist, welche die Tiefe des oder der Blindkanäle (10) übersteigt.

7. Pflanztopf nach Anspruch 5 oder 6, dadurch gekennzeichnet, daß das Verhältnis von Tiefe bzw. Länge zur lichten Weite des oder der Blindkanäle (10) mindestens drei und höchstens sechs, insbesondere vier bis fünf beträgt.

8. Pflanztopf nach einem der Ansprüche 5 bis 7, dadurch gekennzeichnet, daß er in ein wasserdichtes Aufnahmegefäß (4) derart eingesetzt ist, daß zwischen der Umfangswand des Pflanztopfes (2) und dem Aufnahmegefäß (4) ein Zwischenraum (6) als Reservoir für Wasser und/oder eine Nährlösung verbleibt.

9. Pflanztopf nach einem der Ansprüchen 5 bis 7, dadurch gekennzeichnet, daß dessen Umfangswand (3) und vorzugsweise auch dessen Boden- und Standfläche mit einer flüssigkeits- und vorzugsweise dampfdiffusionsdichten Abdeckschicht (26) umgeben ist, welche an der Umfangswand (3) luftspaltfrei anliegt.

10. Pflanztopf nach Anspruch 9, dadurch gekennzeichnet, daß als Abdeckschicht (26) ein Überzug in Form einer Glasur, oder einer durch einen Lackier-, Spritz- oder Tauchvorgang aufgebrachte Beschichtung dient.

**Claims**

1. A method of culturing a plant so as to have a dwarf growth habit, comprising placing plant propagative material together with the young plant or its seed, rooted cuttings, slip or the like in a plant cavity of a plant pot, the volume of such substrate being only sufficient for less than full growth and the wall of said plant pot permitting gas exchanged, characterized in that said plant cavity of the plant pot is connected with at least one blind channel extending in an outward direction and having walls that are approximately parallel and adapted to promote respiration, said blind channel having a clearance width of at least such size as to allow roots of said plant to grow into it, such size, however, equalling at the most the diameter of a primary root of said plant, said channel having a length or depth, resp., equalling more than twice its clearance width.

2. The method as claimed in Claim 1, characterized in that said length or depth, resp., of said blind channel or channels equal(s) three to six times, especially four to five times, said clearance width.

3. The method as claimed in Claims 1 or 2, characterized in that said wall surrounding said plant cavity or such blind channel or channels is/are formed of porous material, pervious for water and nutrients, and that supply of water and nutrients to said plants is made from outside through said wall.

4. The method as claimed in one of Claims 1 or 2, characterized in that said wall surrounding said plant cavity or such blind channel or channels is pervious for water but not or not sufficiently for nutrients, and that said plant is supplied with water from outside through said wall and/or via addition inside said plant cavity, supply with nutrients, however, is made from inside said plant cavity.

5. Plant pot with a plant cavity and made of material permitting gas exchange, especially made of burnt clays for performing the method as claimed in one of Claims 1 to 4, characterized in that said plant cavity (8) is connected to a plurality of possibly symmetrically arranged blind channels (10) extending radially outward and/or axially downward, in the form of one slot each as upwardly arranged with regard to the bottom of said pot, said slot within the region of the wall or the bottom of said plant cavity extending across said plant cavity, the open end of said slot ending in plant cavity (8), the slot-shaped blind channels (10) having a clearance width of at least a few tenths of a millimeter to several millimeters and showing a depth or lengths resp., exceeding twice said clearance width.

6. Plant pot as claimed in Claim 5, characterized in that the circumferential wall of said plant pot (2) shows a thickness exceeding the depth of the channel or channels (10).

7. Plant pot as claimed in Claim 5 or 6, characterized in that the ratio of said depth or length, resp., to said clearance width of the blind channel or channels (10) equal(s) at least three or at most six, especially four to five.

8. Plant pot as claimed in one of Claims 5 to 7, characterized in that it is placed into a waterproof receiving vessel (4), such as to allow a gap (6) remaining between the circumferential wall of said plant pot (2) and said receiving vessel (4), said gap serving as a reservoir for water and/or nutrient solution.

9. Plant pot as claimed in one of Claims 5 to 7, characterized in that the circumferential wall (3) and preferably also the bottom and basic surface of which are coated with a liquid-proof and perferably diffusion-proof covering layer (26), fitting airtightly to the circumferential wall (3).

10. Plant pot as claimed in Claim 9, characterized in that a coating applied by painting, spraying or dipping serves as covering layer (26).

**Revendications**

1. Procédé pour assujettir des plantes à une croissance naine, dans lequel la jeune plante ou éventuellement sa graine, son bulbe, son plant avec racines, sa bouture ou autre semblable est placée dans un trou plante à d'un pot à contenant du substrat d'un volume trop plante faible pour la croissance normale, pot à plante dont la paroi autorise un échange de gaz, caractérisé en ce que le trou à plante du pot à plante est relié à au moins un canal non débouchant, courant approximativement vers l'extérieur, muni de parois pouvant respirer et au moins approximativement parallèles, canal dont le passage libre est dimensionné au moins pour qu'une croissance des racines y soit possible, mais qui correspond au maximum au diamètre d'une racine assez forte de la plante à produire et dont la longueur ou profondeur, resp. atteint plus du double du passage ibre.

2. Procédé selon la revendication 1, caractérisé en ce que la longueur ou profondeur, resp. du ou des canaux non débouchants atteint entre le triple et le sextuple, en particulier entre le quadruple et le quintuple de leur passage libre.

3. Procédé selon la revendication 1 ou la revendication 2, caractérisé en ce que la paroi qui entoure le trou à plante et le ou les canaux non débouchants est constituée d'un matériau poreux perméable à l'eau et aux substances nutritives; et en ce que l'alimentation des plantes en eau et en substances nutritives se fait de l'extérieur à travers cette paroi.

4. Procédé selon l'une des revendications 1 ou 2, caractérisé en ce que la paroi qui entoure le trou à plante et le ou les canaux non débouchants est perméable à l'eau mais non aux substances nutritives; et en ce que l'alimentation en eau se fait de l'extérieur à travers cette paroi et/ou par ajout dans l'intérieur du trou à plante, tandis que l'alimentation en substances nutritives se fait exclusivement par l'intérieur du trou à plante.

5. Pot à plante avec un trou à plante et en un matériau permettant l'échange des gaz, en particulier en argile cuite pour l'exécution du procédé selon l'une des revendications 1 à 4, caractérisé en ce que le trou à plante (8) est joint à un ou plusieurs canaux non débouchants (10), éventuellenment disposés symétriquement, courant radialement vers l'extérieur et/ou axialement vers le bas sous forme chacun d'une fente disposée verticalement par rapport au fond du pot, s'étendant dans la zone de la paroi du trou à plante et/ou dans la zone du fond de ce même trou au-delà du trou à plante et dont l'extrémité ouverte (11) débouche dans le trou à plante (8) étant précisé que les canaux non débouchants en forme de fente (10) présentent un passage libre d'au moins quelques dizièmes de millimètres jusqu'à plusieurs millimètres et présentent une profondeur ou longueur resp., qui atteint plus que le double du passage libre.

6. Pot à plante selon la revendication 5, caractérisé en ce que la paroi périphérique du pot à plante (2) présente une épaisseur qui dépasse la profondeur du ou des canaux non débouchants (10).

7. Pot à plante selon la revendication 6 ou la revendication 6, caractérisé en ce que le rapport de la profondeur ou longueur, resp., au passage libre du ou des canaux non débouchants (10) est au moins trois et au maximum six, en particulier quatre à cinq.

8. Pot à plante selon l'une des revendications 5 à 7, caractérisé en ce qu'il est introduit dans un récipient récepteur (4) étanche à l'eau de façon telle qu'entre la paroi périphérique du pot à plante (2) et le récipient récepteur (4) un espace intermédiaire (6) subsiste comme réservoir pour l'eau et/ou une solution nutritive.

9. Pot à plante selon l'une des revendications 5 à 7, caractérisé en ce que sa paroi périphérique (3) et de préférence aussi sa surface de fond et sa surface verticale sont entourées d'une couche de revêtement (26) étanche au liquide et de préférence à une diffusion de vapeur et venant contre la paroi périphérique (3) sans intervalle d'air.

10. Pot à plante selon la revendication 9, caractérisé en ce que c'est un revêtement sous forme d'émaillage ou d'une couche rapportée par un procédé de peinture, de pulvérisation ou de trempé, qui sert de couche de revêtement (26).

0 174 461

FIG.1

FIG.2

# FIG. 3